# EUROPEAN PATENT APPLICATION

(11) **EP 2 988 040 A1**
(43) Date of publication of application: **24.02.2016**
(21) Application number: 14181540.7
(22) Date of filing: 20.08.2014
(51) Int. Cl.: F16K 15/03, A62C 2/12, F16K 17/34

(54) **A safety valve and a safety arrangement for a fluid piping system**

(71) Applicant: JKF Industri A/S, 9560 Hadsund (DK)
(72) Inventor: Borregaard, Bertil, 9000 Aalborg (DK); Leto, Faketa, 9560 Hadsund (DK); Søborg, Morten, 9560 Hadsund (DK)
(74) Representative: Nielsen, Leif

(57) **Abstract**

The invention relates to a safety valve (1) for a fluid piping system, which valve (1) comprises a housing (2) having an inlet (3) and an outlet (4), the inlet (3) being adapted to connect the housing (2) to an inlet pipe (22) and the outlet (4) being adapted to connect the housing (2) to an outlet pipe (23), the valve (1) further comprising a flap plate (5) being pivotably connected to an axle (6) positioned in an upper part of the housing (2) and transversal to a longitudinal fluid flow direction (x), wherein, when the valve (1) is in an open position, the flap plate (5) hangs downwards the axle (6) at an angular distance (α) from the inlet (3) or an end face (7) of the inlet pipe (22), and a fluid flow is enabled from the inlet pipe (22) to the outlet pipe (23), and, when the valve (1) is in a closed position, the flap plate (5) abuts at least the inlet (3) or the end face (7) of the inlet pipe (22), and the fluid flow is blocked from the inlet pipe (22) to the outlet pipe (23), wherein the valve (1) further comprises a first arm (8) connected to the axle (6) and extending rearwards, a spring-loaded second arm (9) rotatably attached to a lower part of the housing (2) and extending upwards, and a joint (10) connecting the free-ends of the first and second arms (8, 9), the first arm (8) rotating together with the flap plate (5), wherein, when the valve (1) is in the open position, the second arm (9) with the spring in a compressed status exerts a first force on the first arm (8) that makes the flap plate (5) hanging at the angular distance (α) from the inlet (3) or the end face (7) of the inlet pipe (22) and, when a second force in a direction opposite to the fluid flow direction (x) and greater than the first force is exerted on the flap plate (5), the first and second arms (8, 9) snaps at the joint (10), thereby aiding the flap plate (5) in pivoting forwardly and abutting at least the inlet (3) or the end face (7) of the inlet pipe (22). Also, the invention relates to a safety arrangement (20) for a fluid piping system, wherein the safety arrangement (20) comprises a source (25), a vessel (21) and a safety valve (1) as described above, wherein the safety valve (1) is interposed between the source (25) and the vessel (21).

## Description

### Field of the invention

The invention relates to the technical field of safety valves and safety arrangements for fluid piping systems, particularly to suspension and locking mechanisms for such systems.

### Background of the invention

In piping systems handling dust-laden gases, for example, an explosion may occur in the filter. Typically, in order to avoid the explosion from propagating in the pipes of the system, a safety valve can be used.

CH701035A1 relates to an explosion protection valve for interrupting a fluid flow in a pipeline (e.g., in an aspiration line of a dust extraction plant between a dust filter and a dust source). The valve has a flap plate hingedly mounted in a housing and maintained: (i) in a rest position (i.e., vertically downwards) by a spring-load action applied from the top side of the housing; and (ii) in an operating position by the effect of the fluid flow in the housing. If an explosion occurs, the flap plate moves against a valve seat and is held in position by a locking device placed at the bottom of the valve seat.

Since the housing has the same diameter as the inlet and outlet pipes and the flap plate is positioned in the middle of the housing at a distance from the valve seat, the explosion protection valve of CH701035A1 requires a protuberance in the lower part of the housing for facilitating the fluid flow under and laterally the flap plate. Also, the locking device is designed such that the flap plate may vibrate and allow leakage under fluid pressure.

Hence, there is a need in the technical field of safety valves and safety arrangements for fluid piping systems of overcoming the aforementioned drawbacks of the state-of-the-art solutions.

### Aspects of the invention

The first aspect of the invention is to provide an improvement to the state-of-the-art. The second aspect of the invention is to solve the aforementioned drawbacks of the prior art by providing a suspension mechanism, which eases the fluid flow, and a locking mechanism, which enables a tight sealing and minimizes the risk of fluid leakage.

### Description of the invention

The aforementioned aspects of the invention are achieved by a safety valve for a fluid piping system (e.g., for dust-laden fluids in exhaustion plants of industries handling wood, paper, plastic, powder paint, metal, lime, corn, fodder and other organic materials, or for dust-laden gases in air handling systems, etc.), which valve comprises a housing having an inlet and an outlet (e.g., the diameter of the inlet and the outlet may range between 0 200 to Ø 800), the inlet being adapted to connect the housing to an inlet pipe and the outlet being adapted to connect the housing to an outlet pipe, the valve further comprising a flap plate being pivotably connected to an axle positioned in an upper part of the housing (e.g., by the inlet) and transversal to a longitudinal fluid flow direction (e.g., from the inlet pipe to the outlet pipe), wherein, when the valve is in an open position, the flap plate hangs downwards the axle at an angular distance (e.g., 30°) from the inlet or an end face of the inlet pipe (e.g., the end face may lay on a vertical plane or on a plane at an angle from the vertical plane), and a fluid flow is enabled from the inlet pipe to the outlet pipe, and, when the valve is in a closed position, the flap plate abuts at least the inlet or the end face of the inlet pipe, and the fluid flow is blocked from the inlet pipe to the outlet pipe, wherein the valve further comprises a first arm connected to the axle and extending rearwards (e.g., in the fluid flow direction), a spring-loaded second arm rotatably attached to a lower part of the housing (e.g., by the center of the housing) and extending upwards, and a joint connecting the free-ends of the first and second arms, the first arm rotating together with the flap plate, wherein, when the valve is in the open position, the second arm with the spring in a compressed status exerts a first force on the first arm that makes the flap plate hanging at the angular distance from the end face of the inlet pipe (e.g., the spring pre-stress may be as minimal as to maintain the flap plate in position) and, when a second force in a direction opposite to the fluid flow direction (e.g., due to an explosion) and greater than the first force is exerted on the flap plate, the first and second arms snaps at the joint, thereby aiding the flap plate in pivoting forwardly and abutting at least the inlet or the end face of the inlet pipe. Advantageously, the first and second arms may be mounted on the outside of the housing.

Alternatively, the axle may be positioned in a lower part of the housing transversely the fluid flow direction and the second arm may be rotatably attached to the upper part of the housing (e.g., by the center of the housing) and extend downwards, wherein, when the valve is in the open position, the flap plate is pivoted rearwards at the angular distance from the inlet or the end face of the inlet pipe.

Alternatively, the axle may be positioned on a side of the housing upright the fluid flow direction, wherein, when the valve is in the open position, the flap plate is pivoted rearwards at the angular distance from the inlet or the end face of the inlet pipe.

For example, when an explosion occurs upstream the outlet pipe and propagates in the outlet pipe in a direction opposite to the fluid flow direction, the pressure on the rear side of the flap plate increases and pushes on the flap plate until the suspension assembly comprising the first arm, the second arm and the joint finally snaps, whereby the flap plate is pivoted forwardly until it gets in tight contact with, e.g., a sealing ring at the inlet or at the inlet pipe.

The invention has the advantage that the flap plate is held up by the suspension assembly and not by the fluid flow, thus even in case of no fluid flow in the inlet and outlet pipes connected to the valve. Advantageously, the flap plate may be held as close as possible (e.g., parallel) to the top face of the housing. Consequently, the fluid does not use energy at all to keep the flap plate up. Other advantages are: (i) the angular distance provides room for acceleration (e.g., combined with a gravitational acceleration), which helps in closing the flap plate, without, e.g., the need for cutting the end portion of the inlet pipe; (ii) right after the suspension assembly snaps, the pressure spring in the second arm aids pushing the flap plate; and (iii) the pressure exerted by the spring in its elongated status helps holding the valve in the closed position.

In an embodiment of the invention, a first beam extends from a top side of the housing (e.g., it may be welded to the top side of the housing) downwards and a primary second beam extends from about the middle (e.g., within a circle of 5 cm of radius) of a rear side of the flap plate upwards, the first beam including at least one fastener at a free-end (e.g., two), wherein, when the valve is in an open position, the first beam and the second primary beam abut each other and, when the flap plate starts pivoting forwardly, the primary second beam slides down on the first beam until the flap plate comes to abut at least the inlet or the end face of the inlet pipe, whereby the fastener engages with (e.g., by extending transversally behind or by hooking) a free-end of the primary second beam keeping the primary second beam from moving backwards, thereby locking the valve in the closed position. Advantageously, the primary second beam may have substantially the same length of the first beam and/or the primary second beam may abut the first beam along the entire length of the first beam. This embodiment has the advantage of providing a simple, cheap and effective locking mechanism to the valve. In fact, no electrical mechanism is needed to lock the flap plate, which makes the valve simpler in its functioning and less costly to produce. Also, since the primary second beam presses the center of the flap plate, the latter is held closely tight to, e.g., the sealing ring at the inlet or at the inlet pipe, thus minimizing the risk of fluid leakage.

In an embodiment of the invention, the first beam extends perpendicularly from the top side of the housing and the primary second beam is arc-shaped. This embodiment has the advantage that, due to the rotation of the flap plate, the first beam and the primary second beam slide on each other for the entire length of their original overlap, thus never missing contact from each other, which otherwise could trigger a useless release of the fastener.

In an embodiment of the invention, the fastener is a spring-loaded pull bolt. Advantageously, the bolt may be first retracted by pulling the ring outwardly and making the first beam and the primary second beam abut; the bolt will be then released when the bolt will meet a matching hole in the second primary beam or when the bolt will not meet the second primary beam anymore, thereby blocking the free-end of the primary second beam from behind. This embodiment has the advantage of enabling the locking mechanism of the valve.

In an embodiment of the invention, a number of auxiliary second beams extend from a number of points at the periphery of the rear side of the flap plate upwards and converge in a common point at the free-end of the primary second beam. This embodiment has the advantage of keeping the flap plate from tilting at its periphery under fluid pressure when the valve is in a closed position, as the auxiliary second beams press the periphery of the flap plate in a number of points.

Advantageously, the primary second beam and the auxiliary second beams may be welded on to the flap plate.

Also, the aforementioned aspects of the invention are achieved by a safety valve for a fluid piping system, which valve comprises a housing having an inlet and an outlet, the inlet being adapted to connect the housing to an inlet pipe and the outlet being adapted to connect the housing to an outlet pipe, the valve further comprising a flap plate being pivotably connected to an axle positioned in an upper part of the housing and transversal to a longitudinal fluid flow direction, wherein, when the valve is in an open position, the flap plate hangs downwards the axle at an angular distance from the inlet or an end face of the inlet pipe, and a fluid flow is enabled from the inlet pipe to the outlet pipe, and, when the valve is in a closed position, the flap plate abuts at least the inlet or the end face of the inlet pipe, and the fluid flow is blocked from the inlet pipe to the outlet pipe, wherein a first beam extends from a top side of the housing downwards and a primary second beam extends from about the middle of a rear side of the flap plate upwards, the first beam including at least one fastener at a free-end, wherein, when the valve is in an open position, the first beam and the primary second beam abut each other and, when the flap plate starts pivoting forwardly, the primary second beam slides down on the first beam until the flap plate comes to abut at least the inlet or the end face of the inlet pipe, whereby the fastener engages with a free-end of the primary second beam keeping the primary second beam from moving backwards, thereby locking the valve in the closed position.

Also, the aforementioned aspects of the invention are achieved by a safety arrangement for a fluid piping system, wherein the safety arrangement comprises a source (e.g., grinding, welding, cutting, fumes, etc.), a vessel (e.g., a filter, a cyclone, a paper separator, etc.) and any of the safety valves described above, wherein the safety valve is interposed between the source and the vessel. Note that all the abovementioned advantages of the safety valves are as well met by the safety arrangement.

Hereafter, the invention will be described in connection with drawings illustrating non-limiting examples of safety valves and safety arrangements according to the invention.

### Brief description of the drawings

FIG.1A: A perspective, rearward view of the valve in an open position.
FIG.1B: A perspective, rearward view of the valve in a closed position and locked.
FIG.2A: A longitudinal cross-section view of the valve in an open position.
FIG.2B: A longitudinal cross-section view of the valve in a closed position and locked.
FIG.3: Close-up of the fastener with two spring-loaded pull bolts.
FIG.4: A safety arrangement according to the invention.

### Notations

α: Angular distance.
x: Fluid flow direction.
1: Safety valve.
2: Housing.
3: Inlet.
4: Outlet.
5: Flap plate.
6: Axle.
7: End face.
8: First arm.
9: Second arm.
10: Joint.
11: First beam.
12: Top side.
13: Primary second beam.
14: Rear side.
15: Fastener.
16, 17, 18: Auxiliary second beams.
19: Common point.
20: Safety arrangement.
21: Vessel.
22: Inlet pipe.
23: Outlet pipe.
24: Piping element.
25: Source.

### Preferred embodiments of the invention

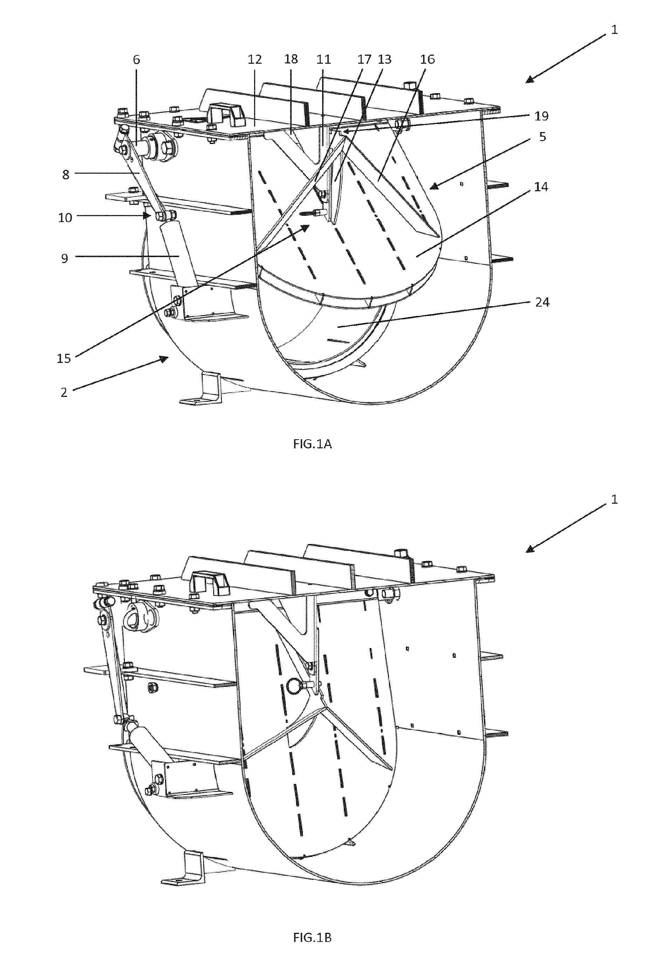

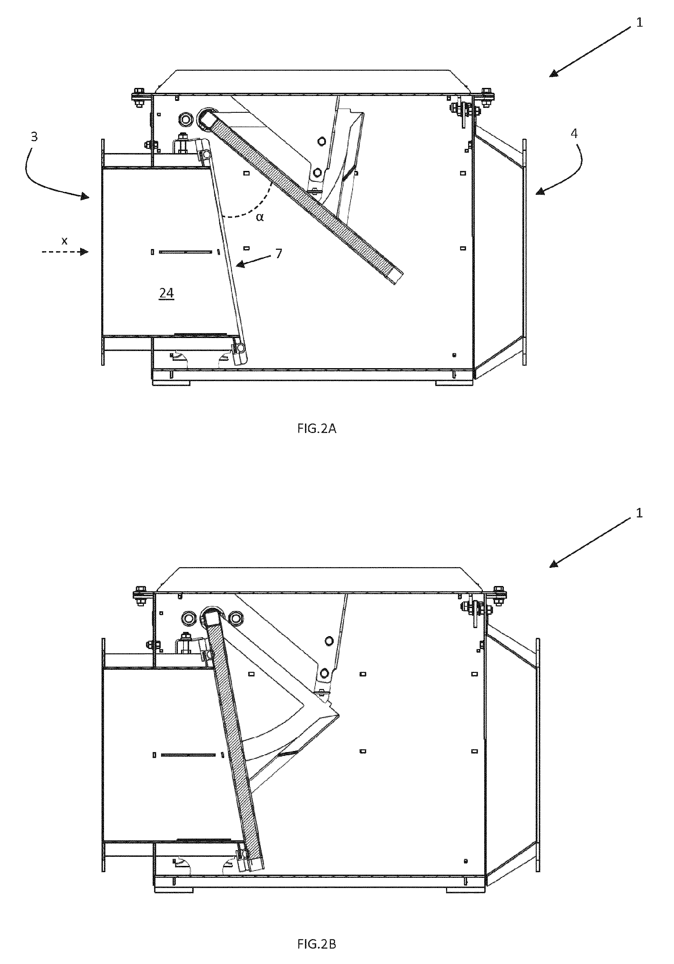

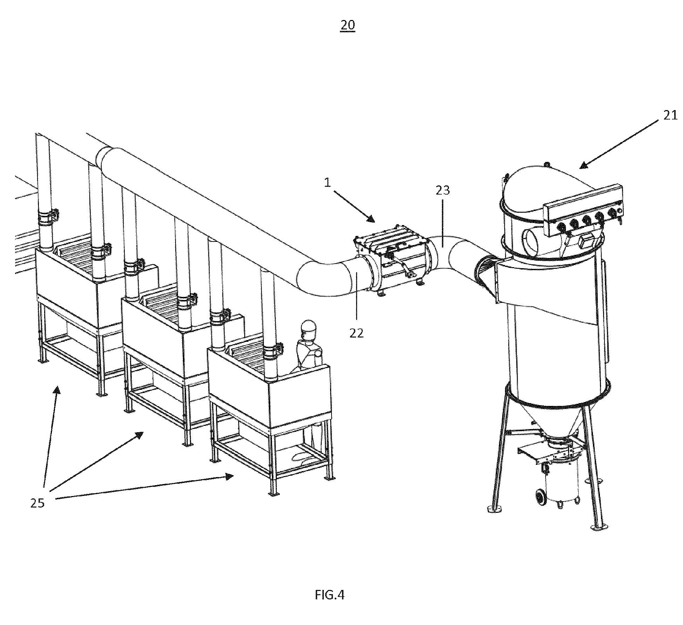

FIGs.1A-B show a safety valve 1 for a fluid piping system, which valve 1 comprises a housing 2 having an inlet 3 and an outlet 4 (ref. FIGs.2A-B) (the rear part of the housing 2 has been removed for showing the inside of the housing 2), the inlet 3 being adapted to connect the housing 2 to an inlet pipe 22 (ref. FIG.4) and the outlet 4 being adapted to connect the housing 2 to an outlet pipe 23 (ref. FIG.4). The valve 1 further comprises a flap plate 5 being pivotably connected to an axle 6 positioned in an upper part of the housing 2, over the end face 7 of a piping element 24 (ref. FIGs.2A-B), and transversal to a longitudinal fluid flow direction x (ref. FIGs.2A-B). When the valve 1 is in an open position (ref. FIGs.1A and 2A), the flap plate 5 hangs downwards the axle 6 at an angular distance α from the end face 7 of the piping element 24 (ref. FIG.2A), and a fluid flow is enabled from the inlet pipe 22 to the outlet pipe 23. When the valve 1 is in a closed position (ref. FIGs.1B and 2B), the flap plate 5 completely covers the end face 7 of the piping element 24, and the fluid flow is blocked from the inlet pipe 22 to the outlet pipe 23.

FIGs.1A-B further show a first arm 8 connected to the axle 6 and extending rearwards, a spring-loaded second arm 9 rotatably attached to a lower, mid part of the housing 2 and extending upwards, and a joint 10 connecting the free-ends of the first and second arms 8, 9, the first arm 8 rotating together with the flap plate 5. When the valve 1 is in the open position (ref. FIGs.1A and 2A), the second arm 9 with the spring in a compressed status exerts a first force on the first arm 8 that makes the flap plate 5 hanging at the angular distance α from the end face 7 of the piping element 24 (ref. FIG.2A). When a second force in a direction opposite to the fluid flow direction x and greater than the first force is exerted on the flap plate 5, the first and second arms 8, 9 snaps at the joint 10, thereby aiding the flap plate 5 in pivoting forwardly and completely cover-ing the end face 7 of the piping element 24 (ref. FIGs.1B and 2B).

FIGs.1-2 show a first beam 11 extending perpendicularly downwards from a top side 12 of the housing 2 and having a spring-loaded pull bolt 15 secured at its free-end. An arc-shaped primary second beam 13 extends from the center of a rear side 14 of the flap plate 5 upwards, whereas three auxiliary second beams 16, 17, 18 extend from a number of points at the periphery of the rear side 14 of the flap plate 5 upwards, con-verging in a common point 19 at the free-end of the primary second beam 13. When the valve 1 is in an open position (ref. FIGs.1A and 2A), the first beam 11 and the primary second beam 13 abut each other. When the flap plate 5 starts pivoting forwardly, the primary second beam 13 slides down on the first beam 11 until the flap plate 5 comes to completely cover the end face 7 of the piping element 24, whereby the pull bolt 15 is released transversally behind the free-end of the primary second beam 13 keeping the primary second beam 13 from moving backwards, thereby lock-ing the valve 1 in the closed position (ref. FIGs.1B and 2B). Note that the common point 19 has a protuberance on to which the released pull bolt 15 can lean on (ref. FIGs.1B and 2B).

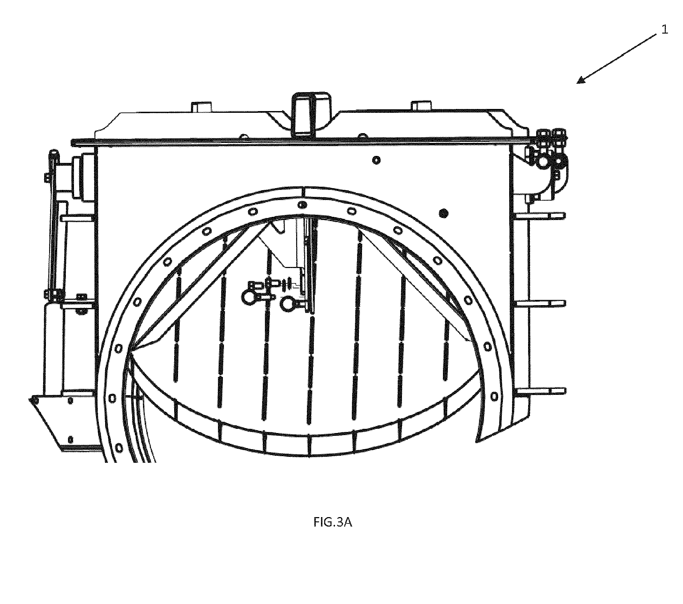

FIG.3 shows a close-up of the fastener 15 of FIGs. 1-2 with two spring-loaded pull bolts.

FIG.4 shows a safety arrangement 20 for a fluid piping system, where the safety arrangement 20 comprises a source 25 (e.g., grinding, welding, cutting, fumes, etc.), a vessel 21 (e.g., a dust filter) and a safety valve 1, wherein the safety valve 1 is interposed between the source 25 and the vessel 21.

## Claims

1. A safety valve (1) for a fluid piping system, which valve (1) comprises a housing (2) having an inlet (3) and an outlet (4), the inlet (3) being adapted to connect the housing (2) to an inlet pipe (22) and the outlet (4) being adapted to connect the housing (2) to an outlet pipe (23), the valve (1) further comprising a flap plate (5) being pivotably connected to an axle (6) positioned in an upper part of the housing (2) and transversal to a longitudinal fluid flow direction (x), wherein, when the valve (1) is in an open position, the flap plate (5) hangs downwards the axle (6) at an angular distance (α) from the inlet (3) or an end face (7) of the inlet pipe (22), and a fluid flow is enabled from the inlet pipe (22) to the outlet pipe (23), and, when the valve (1) is in a closed position, the flap plate (5) abuts at least the inlet (3) or the end face (7) of the inlet pipe (22), and the fluid flow is blocked from the inlet pipe (22) to the outlet pipe (23), **characterized in that** the valve (1) further comprises a first arm (8) connected to the axle (6) and extending rearwards, a spring-loaded second arm (9) rotatably attached to a lower part of the housing (2) and extending upwards, and a joint (10) connecting the free-ends of the first and second arms (8, 9), the first arm (8) rotating together with the flap plate (5), wherein, when the valve (1) is in the open position, the second arm (9) with the spring in a compressed status exerts a first force on the first arm (8) that makes the flap plate (5) hanging at the angular distance (α) from the inlet (3) or the end face (7) of the inlet pipe (22) and, when a second force in a direction opposite to the fluid flow direction (x) and greater than the first force is exerted on the flap plate (5), the first and second arms (8, 9) snaps at the joint (10), thereby aiding the flap plate (5) in pivoting forwardly and abutting at least the inlet (3) or the end face (7) of the inlet pipe (22).

2. A safety valve (1) according to claim 1, **characterized in that** a first beam (11) extends from a top side (12) of the housing (2) downwards and a primary second beam (13) extends from about the middle of a rear side (14) of the flap plate (5) upwards, the first beam (11) including at least one fastener (15) at a free-end, wherein, when the valve (1) is in an open position, the first beam (11) and the primary second beam (13) abut each other and, when the flap plate (5) starts pivoting forwardly, the primary second beam (13) slides down on the first beam (11) until the flap plate (5) comes to abut at least the inlet (3) or the end face (7) of the inlet pipe (22), whereby the fastener (15) engages with a free-end of the primary second beam (13) keeping the primary second beam (13) from moving backwards, thereby locking the valve (1) in the closed position.

3. A safety valve (1) according to claim 2, **characterized in that** the first beam (11) extends perpendicularly from the top side (12) of the housing (2) and the primary second beam (13) is arc-shaped.

4. A safety valve (1) according to claim 2 or claim 3, **characterized in that** the fastener (15) is a spring-loaded pull bolt.

5. A safety valve (1) according to any of claims 2-4, **characterized in that** a number of auxiliary second beams (16, 17, 18) extend from a number of points at the periphery of the rear side (14) of the flap plate (5) upwards and converge in a common point (19) at the free-end of the primary second beam (13).

6. A safety arrangement (20) for a fluid piping system, **characterized in that** the safety arrangement (20) comprises a source (25), a vessel (21) and a safety valve (1) according to any of the preceding claims, wherein the safety valve (1) is interposed between the source (25) and the vessel (21).
